# NEUE EUROPÄISCHE PATENTSCHRIFT

(11) **EP 0 359 991 B2**
(45) Veröffentlichungstag und Bekanntmachung des Hinweises auf die Entscheidung über den Einspruch: **17.11.1994**
(45) Hinweis auf die Patenterteilung: 04.11.1992
(21) Anmeldenummer: 89115057.5
(22) Anmeldetag: 16.08.1989
(51) Int. Cl.: B01D 53/14, C10K 1/14

(54) **Verfahren zum Entfernen von CO2 und gegebenenfalls H2S aus Gasen**
Process for removing carbon dioxide and possibly hydrogen sulphide from gases
Procédé pour éliminer le dioxyde de carbone et éventuellement le sulfure d'hydrogène des gaz

(30) Priorität: 19.08.1988 DE 3828227
(43) Veröffentlichungstag der Anmeldung: 28.03.1990
(73) Patentinhaber: BASF Aktiengesellschaft, 67063 Ludwigshafen (DE)
(72) Erfinder: Gerhardt, Wolfgang, Dr., D-6718 Gruenstadt 3 (DE); Hefner, Werner, Dr., D-6840 Lampertheim 5 (DE)

(56) Entgegenhaltungen:
- DE-B- 2 551 717
- US-A- 4 714 480
- W. Michaeli, W.-H. Stein, H. Unland "Das SELEXOL-Verfahren - ein Beitrag zur selektiven Aufbereitung von saurem Erdgas", Erdöl-Erdgas-Zeitschrift, 91. Jg., Oktober 1975, S. 341-347
- R.D. Stoll, S. Röper "Reinigung von Sauergas", Erdöl und Kohle-Erdgas-Petrochemie vereinigt mit Brennstoff-Chemie, Bd. 35, Heft 8, August 1982, S. 380-385
- E. Freireich, R.N. Tennyson "Process improves acid-gas removal, trims costs, and reduces effluence", The Oil and Gas Journal, August 1976, S. 130-132
- R. Müller "Die Abgasaufbereitungsanlagen Grossenkneten", Erdöl und Kohle-Erdgas-Petrochemie vereinigt mit Brennstoff-Chemie, Bd. 28, Heft 3, März 1975, S. 132-137
- L. Gazzi, O. Sguera, C. Rescalli "Selefining: High Selektivity H2S Removal Process", Erdöl und Kohle-Erdgas-Petrochemie vereinigt mit Brennstoff-Chemie, Bd. 39, Heft 9, September 1986, S. 415-417
- D. Werner "Gasreinigungsverfahren für grosse Wasserstoff-Mengen", Chem.-Ing.-Tech. 53, 1981, Nr. 2, S. 73-81

## Beschreibung

Die vorliegende Erfindung betrifft ein Verfahren zum Entfernen von C0₂ und gegebenenfalls H₂S aus Gasen durch eine Gaswäsche mittels einer wäßrigen, 20 bis 70.Gew.-% Methyldiethanolamin enthaltenden Absorptionsflüssigkeit.

Bei Absorptionsverfahren zur Entfernung von C0₂ aus Gasen wie Synthesegasen und Erdgasen wird das abgetrennte C0₂ häufig als Wertprodukt gewonnen, das für weitere Zwecke Anwendung findet. Beispielsweise wird das bei der Gaswäsche von Erdgasen bzw. Erdölbegleitgasen erhaltene C0₂ nach Kompression in Erdöllagerstätten zurückgeführt, um hierdurch den Grad der Erdölgewinnung zu erhöhen. Weiter wird das aus dem Synthesegas einer Ammoniakanlage in einer C0₂-Wäsche abgetrennte C0₂ häufig in einer nachgeschaltenen Harnstoffanlage als Einsatzstoff für die Umsetzung mit Ammoniak zu Harnstoff verwendet. Dabei ist das in der Ammoniakanlage gewonnene C0₂ in der Regel gegenüber dem in der Ammoniakanlage erhaltenen Ammoniak in bezug auf die Harnstoffbildung im Unterschuß, so daß es von besonderer Bedeutung ist, daß in der C0₂-Wäsche der Ammoniakanlage das C0₂ in möglichst hoher Ausbeute gewonnen wird.

Aus der deutschen Patentschrift 25 51 717 ist es bereits bekannt, C0₂ und gegebenenfalls H₂S aus einem C0₂ und gegebenenfalls H₂S enthaltenden Gas durch eine Gaswäsche mittels einer Absorptionsflüssigkeit zu entfernen, wobei die beladene Absorptionsflüssigkeit zunächst in Entspannungsstufen regeneriert und anschließend zur weiteren Regenerierung einer Abstreifkolonne zugeführt wird. Bei der Anwendung dieses Gaswaschverfahrens für die C0₂-Wäsche eines Ammoniaksynthesegases wird das C0₂ in der Regel in einer Ausbeute zwischen 95 und 97 % gewonnen, wobei die C0₂-Verluste - abgesehen von dem durch die C0₂-Spezifikation des gereinigten Gases vorgegebenen Rest-C0₂-Gehalt im gereinigten Gas - im wesentlichen im Abgas der ersten Entspannungsstufe auftreten.

Aus Hydrocarbon Processing, März-Heft 1988, S. 43-46 ist bereits bekannt, bei einer solchen C0₂-Wäsche unter Verwendung eines physikalischen Lösungsmittels die C0₂-Ausbeute in der Weise zu erhöhen, daß das aus der ersten Entspannungsstufe erhaltene Gas zum Absorber zum Einsatzgas der C0₂-Wäsche zurückgeführt wird. Diese Arbeitsweise hat jedoch die folgenden Nachteile:
- Die aus dem Einsatzgas unter dem relativ hohen Druck in der Absorptionskolonne auszuwaschende C0₂-Menge wird erhöht. Dies führt zu einer Zunahme des erforderlichen Absorptionsmittelumlaufs und dementsprechend zu einer Zunahme der Durchmesser der Absorptions- und Regenerationskolonnen.
- Es ergibt sich weiter ein zusätzlicher Verbrauch an elektrischer Energie für die Kompression des zum Absorber zurückgeführten Gases und die Verpumpung der erhöhten Absorptionsmittelumlaufmenge.
- Die Kühlung und Kompression der Gasströme und die größeren Kolonnen führen zu erhöhten Investitionskosten.

Es ist weiter vorgeschlagen worden, das für die Harnstoffgewinnung benötigte zusätzliche C0₂ durch eine C0₂-Wäsche aus den aus der Ammoniakanlage erhaltenen Verbrennungsgasen zu gewinnen. Wegen der in diesen Verbrennungsgasen häufig noch enthaltenen korrosiven Komponenten wie 0₂ und S0₂ entstehen in solchen CO₂-Wäs- chen oft erhebliche Probleme durch Korrosion von Anlagenteilen und Zersetzung des Lösungsmittels.

Es wurde nun ein vorteilhaftes Verfahren gefunden zum Entfernen von C0₂ und gegebenenfalls H₂S aus einem C0₂ und gegegebenenfalls H₂S enthaltenden Gas mittels einer Absorptionsflüssigkeit, bei dem man das C0₂ und gegebenenfalls H₂S enthaltende Gas in einer Absorptionszone mit einer wäßrigen, 20 bis 70 Gew.-% Methyldiethanolamin enthaltenden Absorptionsflüssigkeit behandelt, aus der Absorptionszone das behandelte Gas abzieht, die aus der Absorptionszone erhaltene, mit C0₂ und gegebenenfalls H₂S beladene Absorptionsflüssigkeit anschließend regeneriert, indem die mit C0₂ und gegebenenfalls H₂S beladene Absorptionsflüssigkeit in einer oder mehreren Entspannungsstufen entspannt wird und am Kopf der ersten Entspannungsstufe bzw. bei mehreren Entspannungsstufen am Kopf mindestens einer der ersten bis vorletzten Entspannungsstufen ein Entspannungsgas abgezogen wird und die aus der letzten Entspannungsstufe erhaltene teilweise regenerierte Absorptionsflüssigkeit gegebenenfalls zur weiteren Regenerierung einer Abstreifzone zugeführt wird, wobei aus der Regenerierung mindestens ein das C0₂ und gegebenenfalls H₂S enthaltender Sauergasstrom abgezogen wird und die regenerierte Absorptionsflüssigkeit in die Absorptionszone zurückgeführt wird, welches dadurch gekennzeichnet ist, daß mindestens einer der Entspannungsstufen, aus denen das Entspannungsgas abgezogen wird, an einer Stelle oberhalb der Zuführung der zu entspannenden Absorptionsflüssigkeit ein Teilstrom von ganz oder teilweise regenerierter Absorptionsflüssigkeit zugeführt wird.

Nach dem neuen Verfahren läßt sich die C0₂-Ausbeute beispielsweise in der C0₂-Wäsche einer Ammoniakanlage in einfacher Weise durch die erfindungsgemäße Nachwäsche des Entspannungsgases der entsprechenden Entspannungsstufe mit teilweise regenerierter Absorptionsflüssigkeit aus der letzten Entspannungsstufe auf über 99 % erhöhen, ohne daß hierfür die gemäß den bekannten Verfahren erforderlichen aufwendigen Maßnahmen erforderlich sind. Entsprechend der geringen Menge des C0₂-haltigen Entspannungsgases wird für die erfindungsgemäße Nachwäsche zum Auswaschen des C0₂ aus dem Entspannungsgas nur ein geringes Kolonnenvolumen benötigt, so daß die zusätzlichen Investitionskosten sehr gering sind. Da weiter nur ein kleiner Teilstrom der beispielsweise aus der letzten Entspannungsstufe durch Absenkung des Drucks erhaltenen teilweise regenerierten Absortionsflüssigkeit für die Nachwäsche benötigt wird, ändert sich der gesamte Wärmebedarf im Regenerationsteil der Sauergaswäsche durch die Nachwäsche praktisch nicht.

Als nach dem erfindungsgemäßen Verfahren zu behandelnde Gase kommen beispielsweise Kohlevergasungsgase, Koksofengase, Erdgase, Erdölbegleitgase und Synthesegase in Betracht, wobei die Anwendung auf C0₂-haltige Erdgase und Erd- ölbegleitgase im Hinblick auf die C0₂-Gewinnung für die tertiäre Erdölförderung und auf Ammoniaksynthesegase im Hinblick auf die Weiterverwendung des gewonnenen C0₂ für die Harnstoffherstellung von besonderem Interesse ist.

Die Gase weisen im allgemeinen einen C0₂-Gehalt von 1 bis 90 Mol.%, vorzugsweise 2 bis 90 Mol.%, insbesondere 3 bis 60 Mol.% auf. Neben dem C0₂ können die Gase als weiteres Sauergas H₂S enthalten, z.B. in Mengen von 1 Mol.ppm bis 50 Mol.%. Da jedoch das erfindungsgemäße Verfahren vorteilhaft für die Gewinnung von C0₂ als Wertprodukt, das in der Regel einen möglichst geringen H₂S-Gehalt aufweisen soll, verwendet wird, werden Einsatzgase bevorzugt, die im allgemeinen weniger als 2 Mol.%, vorzugsweise weniger als 500 Mol.ppm, insbesondere weniger als 50 Mol.ppm, mit besonderem Vorteil weniger als 10 Mol.ppm aufweisen. Insbesondere für C0₂-Wäs- chen in Ammoniakanlagen werden in der Regel praktisch H₂S-freie Synthesegase, z.B. mit einem H₂S-Gehalt von weniger als 0,1 Mol.ppm eingesetzt.

Als Absorptionsflüssigkeiten für das erfindungsgemäße Verfahren werden wäßrige Lösungen von Methyldiethanolamin verwendet, das als wäßrige Absorptionsflüssigkeit mit einem Gehalt von Methyldiethanolamin von 20 bis 70 Gew.%, vorzugsweise 30 bis 65 Gew.%, insbesondere 35 bis 60 Gew.% eingesetzt wird. In einer vorteilhaften Ausführungsform des Verfahrens verwendet man eine wäßrige Methyldiethanolaminlösung, die zusätzlich 0,05 bis 3 Mol/I, vorzugsweise 0,1 bis 2 Mol/I, insbesondere 0,1 bis 1 Mol/I eines primären Amins oder Alkanolamins wie Monoethanolamin, vorzugsweise eines sekundären Amins oder Alkanolamins, vorteilhaft Methylmonoethanolamin, ganz besonders vorteilhaft Piperazin, enthält.

Das erfindungsgemäße Verfahren wird in der Weise durchgeführt, daß das C0₂ und gegebenenfalls H₂S enthaltende Gas in einer Absorptionszone mit der Absorptionsflüssigkeit behandelt wird. Dabei kann die Absorption in einer oder mehreren, vorzugsweise zwei, Absorptionsstufen durchgeführt werden. Bei einer Absorptionsstufe wird das zu behandelnde Gas im unteren Teil der Absorptionsstufe, vorzugsweise im unteren Drittel, zugeführt und im Gegenstrom zur Absorptionsflüssigkeit, die zweckmäßig im oberen Teil der Absorptionsstufe, vorzugsweise im oberen Drittel zugegeben wird, geführt. Die mit den Sauergasen C0₂ und gegebenenfalls H₂S beladene Absorptionsflüssigkeit wird im unteren Teil der Absorptionszone, vorzugsweise im unteren Drittel, insbesondere am Sumpf der Absorptionszone abgezogen. Am Kopf der Absorptionsstufe wird das behandelte Gas abgezogen.

Bei der Anwendung von zwei hintereinandergeschalteten Absorptionsstufen wird das am Kopf der ersten Absorptionsstufe erhaltene Gas anschließend einer zweiten Absorptionszone zugeführt, in der es zur weiteren Entfernung von C0₂ und gegebenenfalls H₂S mit Absorptionsflüssigkeit behandelt wird, die einen geringeren Gehalt an C0₂ und gegebenenfalls H₂S aufweist als die der ersten Absorptionsstufe zugeführte Absorptionsflüssigkeit. Auch bezüglich der zweiten Absorptionsstufe wird das zu behandelnde Gas zweckmäßig im unteren Teil, vorzugsweise im unteren Drittel, dieser Absorptionsstufe zugeführt und im Gegenstrom zur Absorptionsflüssigkeit geführt, die zweckmäßig im oberen Teil, vorzugsweise im oberen Drittel, der zweiten Absorptionsstufe zugegeben wird. Das Produktgas wird am Kopf der zweiten Absorptionsstufe abgezogen. Die am Boden der zweiten Absorptionsstufe erhaltene mit C0₂ und/oder H₂S vorbeladene wäßrige Absorptionsflüssigkeit wird am Kopf der ersten Absorptionsstufe zugeführt. In der ersten und zweiten Absorptionsstufe werden im allgemeinen Drucke von 2 bis 130 bar, vorzugsweise 10 bis 120 bar, insbesondere 20 bis 110 bar angewendet. Dabei können in der ersten und zweiten Stufe unterschiedliche Drucke verwendet werden. Im allgemeinen wird man jedoch in der ersten und zweiten Absorptionsstufe bei gleichem Druck bzw. bei im wesentlichen gleichem Druck arbeiten, wobei die Druckunterschiede z.B. durch den sich den den Absorptionsstufen einstellenden Druckverlust bewirkt werden. Als Absorptionsstufen werden zweckmäßig Absorptionskolonnen verwendet, im allgemeinen Füllkörperkolonnen oder mit Böden ausgestattete Kolonnen. Die mit den Sauergasen C0₂ und gegebenenfalls H₂S beladene Absorptionsflüssigkeit wird im unteren Teil der ersten Absorptionsstufe abgezogen.

Anschließend wird die aus der Absorptionszone erhaltene, mit C0₂ und gegebenenfalls H₂S beladene Absorptionsflüssigkeit regeneriert, indem die mit C0₂ und gegebenenfalls H₂S beladene Absorptionsflüssigkeit in einer oder mehreren, vorzugsweise zwei bis vier, insbesondere zwei oder drei, Entspannungsstufen entspannt wird, wobei am Kopf der ersten Entspannungsstufe bzw. bei mehreren Entspannungsstufen am Kopf mindestens einer der ersten bis vorletzten Entspannungsstufen ein Entspannungsgas erhalten wird. Die aus der oder den Entspannungsstufen erhaltene teilweise regenerierte Absorptionsflüssigkeit kann in die Absorptionszone zurückgeführt werden. Sie kann jedoch auch zur weiteren Regenerierung einer Abstreifzone zugeführt werden, in der die noch in diesem Strom enthaltenen Sauergase C0₂ und gegebenenfalls H2 S praktisch ganz ausgestreift werden. Als Ausstreifmittel kommen z.B. Wasserdampf, inerte Gase wie Stickstoff in Betracht. Falls das zu behandelnde Gas als Sauergas nur C0₂ enthält, d.h. frei von H₂S ist, kommen als Ausstreifmittel auch Luft in Betracht. Bei einer einstufigen Absorption wird, falls die aus der oder den Entspannungsstufen erhaltene teilweise regenerierte Absorptionsflüssigkeit zur weiteren Regenerierung einer Abstreifzone zugeführt wird, die im unteren Teil der Abstreifzone erhaltene regenerierte Absorptionsflüssigkeit in die Absorptionsstufe zurückgeführt und dort zweckmäßig am Kopf der Absorptionsstufe zugegeben. Bei einer zweistufigen Absorption wird zweckmäßig die am Sumpf der letzten Entspannungsstufe erhaltene Absorptionsflüssigkeit teilweise als Waschflüssigkeit in die erste Absorptionsstufe zurückgeführt, und es wird ein weiterer Teilstrom der am Sumpf der letzten Entspannungsstufe erhaltenen Absorptionsflüssigkeit zur weiteren Regenerierung der Abstreifzone zugeführt. Die am Sumpf der Abstreifzone erhaltene ganz regenerierte Absorptionsflüssigkeit wird in die zweite Absorptionsstufe zurückgeführt und dort zweckmäßig am Kopf dieser Absorptionsstufe zugegeben.

Es ist ein wesentliches Merkmal des vorliegenden Verfahrens, daß mindestens einer der Entspannungsstufen, aus denen Entspannungsgas abgezogen wird, an einer Stelle oberhalb der Zuführung der zu entspannenden Absorptionsflüssigkeit ein Teilstrom von ganz oder teilweise regenerierter Absorptionsflüssigkeit zugeführt wird. Zweckmäßig wird die ganz oder teilweise regenerierte Absorptionsflüssigkeit im oberen Teil, vorzugsweise im oberen Drittel der betreffenden Entspannungsstufe-(n) zugeführt und im Gegenstrom zu dem in der oder den betreffenden Entspannungsstufen freigesetzten Entspannungsgas geführt. Zweckmäßig ist der Raum oberhalb der Zuführung der zu entspannenden Absorptionsflüssigkeit zu der oder den Entspannungsstufen, woraus das Entspannungsgas abgezogen wird, als Absorptionszone gestaltet, d.h. man startet ihn zweckmäßig mit Füllkörperpackungen oder mit Böden aus, wodurch die Effektivität der Auswaschung des C0₂ und gegebenenfalls des H₂S aus dem Entspannungsgas verbessert wird. Für die Auswaschung des C0₂ und gegebenenfalls H₂S aus dem Entspannungsgas wird nur ein kleiner Teilstrom der ganz oder teilweise regenerierten Absorptionsflüssigkeit benötigt. Im allgemeinen verhalten sich der der Nachwäsche in der oder den Entspannungsstufen zugeführte Teilstrom der ganz oder teilweise regenerierten Absorptionsflüssigkeit zu dem oder der Summe aus den zur Absorptionszone zugeführten Strömen der ganz oder teilweise regenerierten Absorptionsflüssigkeit mengenmäßig zueinander wie 1:100 bis 1:2, vorzugsweise 1:80 bis 1:5, insbesondere 1:50 bis 1:10. Bei der Verwendung von mehreren Entspannungsstufen in der Regenerierung wird der erfindungsgemäßen Nachwäsche im allgemeinen ein Teilstrom von teilweise regenerierter Absorptionsflüssigkeit aus der letzten Entspannungsstufe zugeführt. Es ist jedoch auch möglich, einen Teilstrom von aus der Abstreifzone erhaltener, ganz regenerierter Absorptionsflüssigkeit für die Nachwäsche einzusetzen. Falls die Regenerierung aus einer einzelnen Entspannungsstufe und einer Abstreifzone besteht, wird der Nachwäsche in der Entspannungsstufe ein Teilstrom von aus der Abstreifzone erhaltener regenerierter Absorptionsflüssigkeit zugeführt.

Der das C0₂-Produkt enthaltende Sauergasstrom wird bei Verwendung von mehreren Entspannungsstufen in der Regenerierung zweckmäßig am Kopf der letzten Entspannungsstufe und gegebenenfalls zusätzlich am Kopf des Ausstreifers abgezogen. Es ist jedoch auch möglich, zusätzlich am Kopf von einer oder mehreren der vorletzten bis zweiten Entspannungsstufe weitere das C0₂-Produkt enthaltende Sauergasströme abzuziehen. Bei Verwendung von einer einzelnen Entspannungsstufe und einer Abstreifzone für die Regenerierung wird der das C0₂-Produkt enthaltende Sauergasstrom am Kopf der Abstreifzone abgezogen.

Eine weitere Ausführungsform des erfindungsgemäßen Verfahrens besteht darin, daß man das aus der oder den Entspannungsstufen abgezogene und gemäß der erfindungsgemäßen Nachwäsche mit ganz oder teilweise regenerierter Absorptionsflüssigkeit behandelte Entspannungsgas in die Absorptionszone zurückführt. Zweckmäßig wird das zurückgeführte Entspannungsgas dem der Absorptionszone zugeführten Einsatzgas zugemischt. Durch diese Maßnahme kann die C0₂-Ausbeute noch weiter erhöht werden. Durch die vorherige Behandlung des Entspannungsgases mit regenerierter Absorptionsflüssigkeit und die dadurch bewirkte Auswaschung der Sauergase verbleibt nur noch ein geringer Reststrom des Entspannungsgases, so daß nur ein sehr geringer Gasstrom in die Absorptionszone zurückzuführen ist.

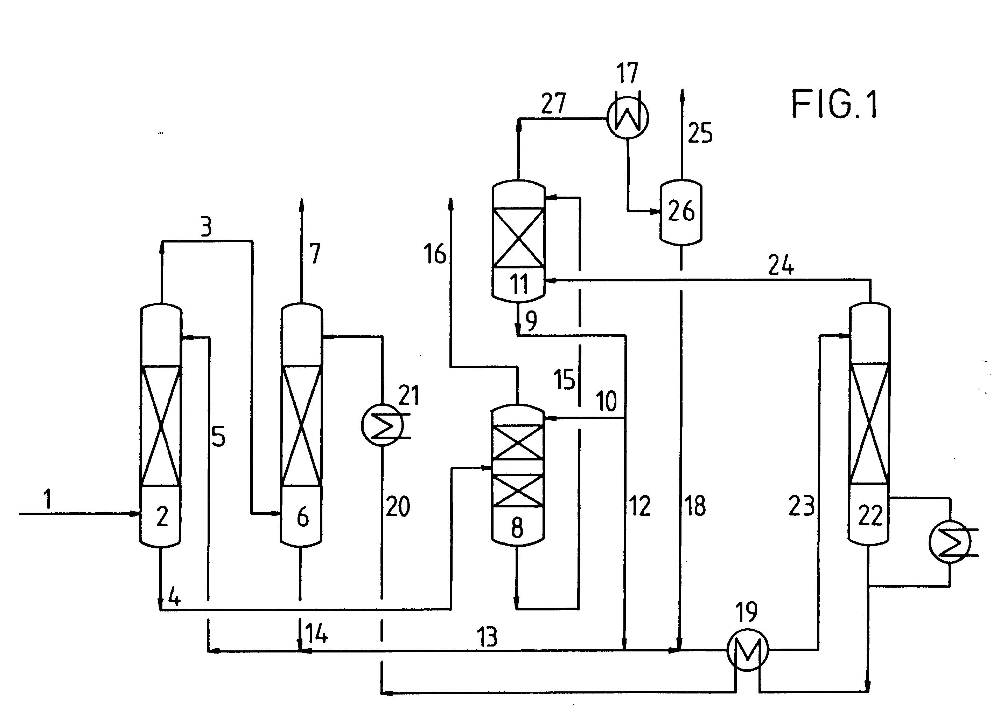

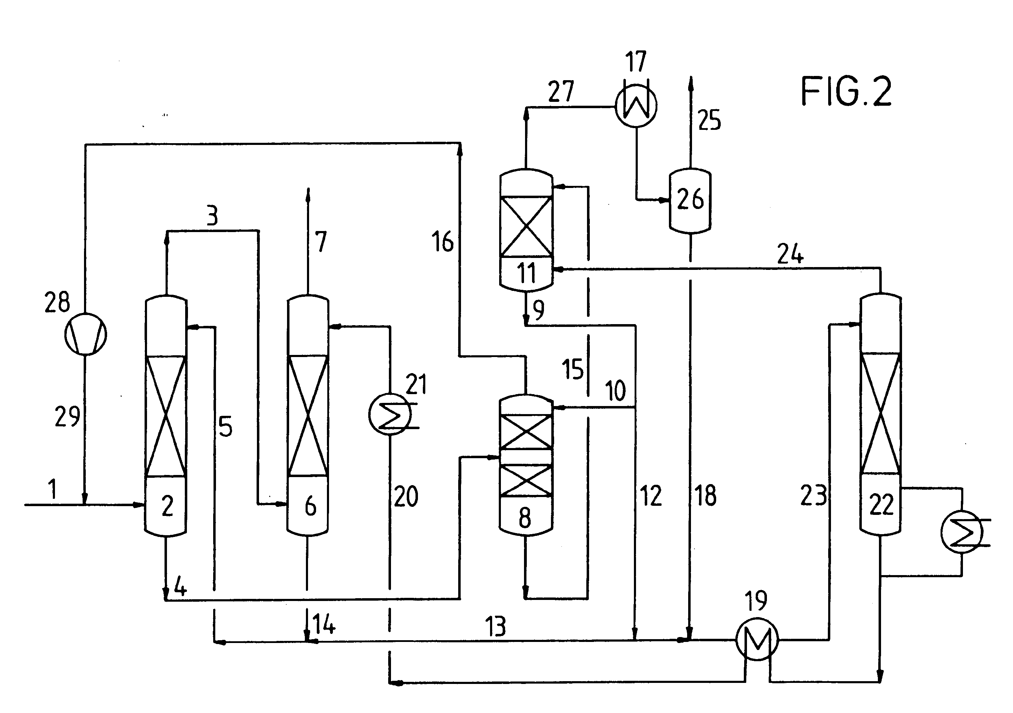

Nachfolgend werden weitere Einzelheiten der Erfindung anhand von zwei Ausführungsbeispielen, deren Verfahrensablauf in den Figuren 1 und 2 schematisch dargestellt ist, erläutert.

Gemäß Figur 1 wird ein C0₂ und gegebenenfalls H₂S enthaltendes Gas, z.B. ein C0₂ als Sauergas enthaltendes Synthesegas, über Leitung 1 unter Druck in den Sumpf der ersten Absorptionskolonne 2 gegeben. Gleichzeitig wird über Leitung 5 als Absorptionsflüssigkeit 20 bis 70 %ige wäßrige Methyldiethanolaminlösung auf den Kopf der ersten Absorptionskolonne gegeben. Das am Kopf der ersten Absorptionskolonne erhaltene vorgewaschene Gas wird zur Feinreinigung über Leitung 3 in den Sumpf der zweiten Absorptionskolonne 6 gegeben. Gleichzeitig wird über Leitung 20 als Absorptionsflüssigkeit 20 bis 70 gew.%ige wäßrige Methyldiethanolaminlösung, die aus der Abstreifkolonne 22 erhalten wird und praktisch frei von Sauergasen ist, auf den Kopf der zweiten Absorptionskolonne gegeben. Das gewaschene Gas wird über Leitung 7 am Kopf der zweiten Absorptionskolonne 6 abgezogen. Die am Sumpfderzweiten Absorptionskolonne erhaltene mit den Sauergasen vorbeladene wäßrige Absorptionsflüssigkeit wird über Leitungen 14 und 5 nach Vereinigung mit der über Leitungen 12 und 13 aus der letzten Entspannungsstufe 11 erhaltenen Absorptionsflüssigkeit auf den Kopf der ersten Absorptionskolonne 2 gegeben. Die am Sumpf der ersten Absorptionskolonne 2 erhaltene, mit C0₂ und gegebenenfalls H₂S beladene wäßrige Absorptionsflüssigkeit wird zur Regenerierung über Leitung 4 in einer ersten Entspannungskolonne 8 entspannt, z.B. über ein Ventil oder vorzugsweise über eine Entspannungsturbine. Hierbei wird ein Zwischenentspannungsgas aus der Absorptionsflüssigkeit freigesetzt, das im Gegenstrom zu der aus der letzten Entspannungsstufe 11 über Leitungen 9 und 10 abgezogenen, am Kopf der Kolonne 8 zugegebenen teilweise regenerierten Absorptionsflüssigkeit geführt wird, wobei ein hoher Anteil der in dem Entspannungsgas enthaltenen Sauergase ausgewaschen wird. Das mit teilweise regenerierter Absorptionsflüssigkeit behandelte Entspannungsgas wird über Leitung 16 abgezogen. Am Boden der Entspannungskolonne 8 wird die teilentspannte Absorptionsflüssigkeit abgezogen und über Leitung 15 in die Entspannungskolonne 11 entspannt. Am Kopf der Entspannungskolonne 11 wird über Leitung 27 ein das C0₂-Produkt enthaltendes Entspannungsgas abgezogen, das nach Passieren des Wärmetauschers 17 und des Abscheidegefäßes 26 über Leitung 25 abgezogen wird. Die am Sumpf der Entspannungskolonne 11 über Leitung 9 abgezogene entspannte Absorptionsflüssigkeit wird, wie bereits vorstehend ausgeführt, zu einem sehr geringen Anteil, z.B. in einer Menge von 3 bis 10%, bezogen auf die insgesamt aus der Kolonne 11 abgezogene Absorptionsflüssigkeit, über Leitung 10 auf den Kopf der Entspannungskolonne 8 aufgegeben. Der weitaus größere Teil der entspannten Absorptionsflüssigkeit wird über Leitung 12 weitergeführt und zu einem Teil über Leitungen 13 und 5 zum Kopf der Absorptionskolonne 2 zurückgeführt und zum anderen Teil über Leitung 23 auf den Kopf der Abstreifkolonne 22 gegeben. Das im Abscheidegefäß 26 anfallende Kondensatwasser wird über Leitung 18 der in der Abstreifkolonne 22 weiter zu regenerierenden Absorptionsflüssigkeit zugeführt.

Die am Sumpf der Abstreifkolonne 22 erhaltene regenerierte Absorptionsflüssigkeit wird über Leitung 20 nach Passieren der Wärmetauscher 19 und 21 auf den Kopf der zweiten Absorptionskolonne 6 zurückgeführt. Der am Kopf der Abstreifkolonne 22 erhaltene C0₂ und gegebenenfalls H₂S enthaltende Abgasstrom wird über Leitung 24 zweckmäßig dem unteren Teil der Entspannungskolonne 11 zugeführt. Es ist jedoch auch möglich, den am Kopf der Abstreifkolonne 22 erhaltenen Abgasstrom unmittelbar aus dem System abzuziehen, ohne ihn noch vorher der Entspannungskolonne 11 zuzuführen.

In einem weiteren Ausführungsbeispiel (vgl. Fig. 2) wird wie im ersten Ausführungsbeispiel verfahren, wobei jedoch das am Kopf der Kolonne 8 über Leitung 16 abgezogene Entspannungsgas im Kompressor 28 verdichtet wird und über Leitung 29 dem über Leitung 1 der Absorptionskolonne 2 zugeführten Einsatzgas zugegeben wird.

Das folgende Beispiel veranschaulicht die Erfindung.

### Beispiel

Man verwendet eine Gaswaschanlage entsprechend der Fig. 1 mit zwei hintereinandergeschalteten Absorptionskolonnen, zwei hintereinandergeschalteten Entspannungskolonnen und einer Abstreifkolonne. In den Absorptionskolonnen werden 6410 kmol/h eines C0₂-haltigen Synthesegases mit einer 40 gew.%igen wäßrigen MethyldiethanolaminLösung als Absorptionsflüssigkeit gewaschen. Das zu reinigende Synthesegas wird mit einem Druck von 35 bar am Sumpf der ersten Absorptionskolonne zugeführt. Das zu reinigende, aus einem Steam Reformer stammende Gas hat die folgende Zusammensetzung:
C0₂ 17,9 Vol.%
CO 0,3 Vol.%
H₂ 60,3 Vol.%
N₂ 20,7 Vol.%
CH₄ 0,5 Vol.%
Ar 0,3 Vol.%.

Die Temperatur der Absorptionsflüssigkeit im Zulauf zur ersten Absorptionskolonne beträgt 73 °C. Die Temperatur der der zweiten Absorptionskolonne zugeführten Absorptionsflüssigkeit beträgt 50 _{°} C. Das am Kopf der zweiten Absorptionskolonne abgezogene gereinigte Synthesegas hat die folgende Zusammensetzung:
C0₂ 0,1 Vol.%
CO 0,4 Vol.%
H₂ 73,3 Vol.%
N₂ 25,3 Vol.%
CH₄ 0,6 Vol.%
Ar 0,3 Vol.%.

Die die erste Absorptionskolonne am Sumpf verlassende beladene Absortionsflüssigkeit wird der ersten Entspannungskolonne im mittleren Bereich zugeführt und dort auf einen Druck von 8 barentspannt, wobei Entspannungsgas freigesetzt wird. Die obere Hälfte der ersten Entspannungskolonne ist durch den Einbau einer Füllkörperpakkung als Absorptionszone gestaltet. Die am Boden derersten Entspannungskolonne abgezogene Absorptionsflüssigkeit wird anschließend in die zweite Entspannungskolonne auf einen Druck von 1,25 bar entspannt. Die am Boden der zweiten Entspannungskolonne erhaltene entspannte, teilregenerierte Absorptionsflüssigkeit wird zu etwa 6 % dem oberen Teil der ersten Entspannungskolonne zugeführt und wird in der Absorptionszone der ersten Entspannungskolonne im Gegenstrom zu dem aufsteigenden Entspannungsgas geführt. Am Kopf der ersten Entspannungskolonne werden 28 kmol/h des mit teilregenerierter Absorptionsflüssigkeit gewaschenen Entspannungsgases mit einem C0₂-Gehalt von nur 15 Vol.% abgezogen. Die verbleibende aus der zweiten Entspannungskolonne abgezogene entspannte, teilregenerierte Absorptionsflüssigkeit wird zu etwa 4/5 in die erste Absorptionskolonne zurückgeführt und zu etwa 1/5 der Abstreifkolonne zugeführt. Die aus der Abstreifkolonne erhaltene vollständig regenerierte Absorptionsflüssigkeit wird in die zweite Absorptionskolonne zurückgeführt.

Am Kopf der zweiten Entspannungskolonne wird das C0₂-Produkt in einer Reinheit von 99,8 % und einer Ausbeute von 99,2 % erhalten.

Falls das am Kopf der ersten Entspannungskolonne abgezogene Entspannungsgas entsprechend Fig. 2 in die erste Absorptionskolonne zurückgeführt wird, erhöht sich die Ausbeute an C0₂-Produkt bei vergleichbarer Reinheit auf 99,5 %.

### Vergleichsversuch

In einem Vergleichsversuch wird wie im Beispiel (ohne Rückführung des Entspannungsgases zur ersten Absorptionskolonne) verfahren, wobei jedoch gemäß den herkömmlichen Verfahren das in der ersten Entspannungskolonne erhaltene Entspannungsgas nicht einer Nachwäsche mit regenerierter Absorptionsflüssigkeit unterzogen wird. Dabei wird das am Kopf der zweiten Entspannungskolonne abgezogene C0₂-Produkt bei vergleichbarer Reinheit wie im Beispiel lediglich in einer Ausbeute von 96,2% erhalten.

## Patentansprüche

1. Verfahren zum Entfernen von C0₂ und gegebenenfalls H₂S aus einem C0₂ und gegebenenfalls H₂S enthaltenden Gas mittels einer wäßrigen, 20 bis 70 Gew.-% Methyldiethanolamin enthaltenden Absorptionsflüssigkeit, bei dem man das C0₂ und gegebenenfalls H₂S enthaltende Gas in einer Absorptionszone mit der Absorptionsflüssigkeit behandelt, aus der Absorptionszone das behandelte Gas abzieht, die aus der Absorptionszone erhaltene, mit C0₂ und gegebenenfalls H₂S beladene Absorptionsflüssigkeit anschließend regeneriert, indem die mit C0₂ und gegebenenfalls H₂S beladene Absorptionsflüssigkeit in einer oder mehreren Entspannungsstufen entspannt wird und am Kopf der ersten Entspannungsstufe bzw. bei mehreren Entspannungsstufen am Kopf mindestens einer der ersten bis vorletzten Entspannungsstufen ein Entspannungsgas abgezogen wird und die aus der letzten Entspannungsstufe erhaltene teilweise regenerierte Absorptionsflüssigkeit gegebenenfalls zur weiteren Regenerierung einer Abstreifzone zugeführt wird, wobei aus der Regenerierung mindestens ein das C0₂ und gegebenenfalls H₂S enthaltender Sauergasstrom abgezogen wird und die regenerierte Absorptionsflüssigkeit in die Absorptionszone zurückgeführt wird, dadurch gekennzeichnet, daß mindestens einer der Entspannungsstufen, aus denen das Entspannungsgas abgezogen wird, an einer Stelle oberhalb der Zuführung der zu entspannenden Absorptionsflüssigkeit ein Teilstrom von ganz oder teilweise regenerierter Absorptionsflüssigkeit zugeführt wird.

2. Verfahren nach Anspruch 1, dadurch gekennzeichnet, daß mindestens zwei Entspannungsstufen verwendet werden und der oder den Entspannungsstufen, aus denen das Entspannungsgas abgezogen wird, je ein Teilstrom von aus der letzten Entspannungsstufe abgezogener teilweise regenerierter Absorptionsflüssigkeit jeweils an einer Stelle oberhalb der Zuführung der zu entspannenden Absorptionsflüssigkeit zu der betreffenden Entspannungsstufe zugeführt wird.

3. Verfahren nach Anspruch 1 und 2, dadurch gekennzeichnet, daß man das C0₂ und gegebenenfalls H₂S enthaltende Gas zunächst in einer ersten Absorptionsstufe mit Absorptionsflüssigkeit behandelt, das am Kopf der ersten Absorptionsstufe erhaltene Gas einer zweiten Absorptionsstufe zuführt, in der es zur weiteren Entfernung von C0₂ und gegebenenfalls H₂S mit Absorptionsflüssigkeit behandelt wird, die einen geringeren Gehalt an C0₂ und gegebenenfalls H₂S aufweist als die der ersten Absorptionsstufe zugeführte Absorptionsflüssigkeit, am Kopf der zweiten Absorptionsstufe das behandelte Gas abzieht, die am Boden der zweiten Absorptionsstufe erhaltene mit C0₂ und gegebenenfalls H₂S vorbeladene wäßrige Absorptionsflüssigkeit am Kopf der ersten Absorptionsstufe zuführt, die im unteren Teil der ersten Absorptionsstufe erhaltene, mit C0₂ und gegebenenfalls H₂S beladene Absorptions flüssigkeit zur Regenerierung in mindestens zwei Entspannungsstufen entspannt, einen Teilstrom des am Sumpf der letzten Entspannungsstufe erhaltenen Stroms der Absorptionsflüssigkeit in die erste Absorptionsstufe zurückführt, einen weiteren Teilstrom des am Sumpf der letzten Entspannungsstufe erhaltenen Stroms der Absorptionsflüssigkeit mindestens einer der ersten bis vorletzten Entspannungsstufen zuführt, einen weiteren am Sumpf der letzten Entspannungsstufe erhaltenen Strom der Absorptionsflüssigkeit zur weiteren Regenerierung einer Abstreifzone zuführt und die am Sumpf der Abstreifzone erhaltene regenerierte Absorptionsflüssigkeit in die zweite Absorptionsstufe zurückführt.

4. Verfahren nach Anspruch 1 und 2, dadurch gekennzeichnet, daß man das C0₂ und gegebenenfalls H₂S enthaltende Gas in einer Absorptionsstufe mit Absorptionsflüssigkeit behandelt, am Kopf der Absorptionsstufe das behandelte Gas abzieht, die im unteren Teil der Absorptionsstufe erhaltene, mit C0₂ und gegebenenfalls H₂S beladene Absorptionsflüssigkeit zur Regenerierung in mindestens zwei Entspannungsstufen entspannt und zur weiteren Regenerierung einer Abstreifzone zuführt, einen Teilstrom des am Sumpf der letzten Entspannungsstufe erhaltenen Stroms der Absorptionsflüssigkeit und/oder einen Teilstrom des am Sumpf der Abstreifzone erhaltenen Stroms der Absorptionsflüssigkeit mindestens einer der ersten bis vorletzten Entspannungsstufen zuführt und den am Sumpf der Abstreifzone erhaltenen Strom der Absorptionsflüssigkeit ganz oder teilweise in die Absorptionsstufe zurückführt.

5. Verfahren nach Anspruch 1 und 2, dadurch gekennzeichnet, daß man das C0₂ und gegebenenfalls H₂S enthaltende Gas in einer Absorptionsstufe mit Absorptionsflüssigkeit behandelt, am Kopf der Absorptionsstufe das behandelte Gas abzieht, die im unteren Teil der Absorptionsstufe erhaltene, mit C0₂ und gegebenenfalls H₂S beladene Absorptionsflüssigkeit zur Regenerierung in mindestens zwei Entspannungsstufen entspannt, einen Teilstrom des am Sumpf der letzten Entspannungsstufe erhaltenen Stroms der Absorptionsflüssigkeit mindestens einer der ersten bis vorletzten Entspannungsstufen zuführt und einen weiteren Teilstrom des am Sumpf der letzten Entspannungsstufe erhaltenen Stroms der Absorptionsflüssigkeit in die Absorptionsstufe zurückführt.

6. Verfahren nach Anspruch 1 bis 5, dadurch gekennzeichnet, daß man mindestens eines der mit regenerierter Absorptionsflüssigkeit behandelten Entspannungsgase in die Absorptionszone zurückführt.

## Claims

1. A process for removing C0₂ and, if necessary, H₂S from a gas which contains C0₂ and may contain H₂S with an aqueous absorption liquid containing from 20 to 70% by weight of methyldiethanolamine, in which the gas which contains C0₂ and may contain H₂S is treated in an absorption zone with the absorption liquid, the treated gas is removed from the absorption zone, the absorption liquid which is obtained from the absorption zone and is laden with C0₂ and may be laden with H2 S is then regenerated in that the said absorption liquid is let down in one or more let-down stages and a let-down gas is taken off at the top of the first let-down stage or, in the case of a plurality of let-down stages, at the top of one or more of the first to penultimate let-down stages, and the partially regenerated absorption liquid obtained from the last let-down stage is, if required, fed to a stripping zone for further regeneration, one or more acid gas streams which contain the C0₂ and may contain H₂S being removed from the regeneration stage and the regenerated absorption liquid being recycled to the absorption zone, wherein a bleed stream of completely or partially regenerated absorption liquid is fed to one or more of the let-down stages from which the let-down gas is removed, at a point above the feed of the absorption liquid to be let down.

2. A process as claimed in claim 1, wherein two or more let-down stages are used and a bleed stream of partially regenerated absorption liquid removed from the last let-down stage is fed to the let-down stage or each of the let-down stages from which the let-down gas is removed, in each case at a point above the point at which the absorption liquid to be let down is fed to the relevant let-down stage.

3. A process as claimed in claims 1 and 2, wherein the gas which contains C0₂ and may contain H₂S is first treated with absorption liquid in a first absorption stage, the gas obtained at the top of the first absorption stage is fed to a second absorption stage, in which, for further removal of C0₂ and, where relevant, H₂S, it is treated with absorption liquid which has a lower content of C0₂ and, where relevant, H₂S than the absorption liquid fed to the first absorption stage, the treated gas is taken off at the top of the second absorption stage, the aqueous absorption liquid initially laden with C0₂ and, where relevant, H₂S and obtained at the bottom of the second absorption stage is fed to the top of the first absorption stage, the absorption liquid which is laden with C0₂ and may be laden with H2 S and is obtained in the lower part of the first absorption stage is regenerated by being let down in two or more let-down stages, a bleed stream of the stream of absorption liquid obtained at the bottom of the last let-down stage is recycled to the first absorption stage, a further bleed stream of the stream of absorption liquid obtained at the bottom of the last let-down stage is fed to one or more of the first to penultimate let-down stages, a further stream of absorption liquid obtained at the bottom of the last let-down stage is fed to a stripping zone for further regeneration, and the regenerated absorption liquid obtained at the bottom of the stripping zone is recycled to the second absorption stage.

4. A process as claimed in claims 1 and 2, wherein the gas which contains C0₂ and may contain H₂S is treated with absorption liquid in an absorption stage, the treated gas is taken off at the top of the absorption stage, the absorption liquid which is laden with C0₂ and may be laden with H₂S and is obtained in the lower part of the absorption stage is regenerated by being let down in two or more let-down stages and is fed to a stripping zone for further regeneration, a bleed stream of the stream of absorption liquid obtained at the bottom of the last let-down stage and/or a bleed stream of the stream of absorption liquid obtained at the bottom of the stripping zone are fed to one or more of the first to penultimate let-down stages, and the stream of absorption liquid obtained at the bottom of the stripping zone is completely or partially recycled to the absorption stage.

5. A process as claimed in claims 1 and 2, wherein the gas which contains C0₂ and may contain H₂S is treated with absorption liquid in an absorption stage, the treated gas is taken off at the top of the absorption stage, the absorption liquid which is laden with C0₂ and may be laden with H₂S and is obtained in the lower part of the absorption stage is regenerated by being let down in two or more let-down stages, a bleed stream of the stream of absorption liquid obtained at the bottom of the last let-down stage is fed to one or more of the first to penultimate let-down stages, and a further bleed stream of the stream of absorption liquid obtained at the bottom of the last let-down stage is recycled to the absorption stage.

6. A process as claimed in any of claims 1 to 5, wherein one or more of the let-down gases treated with regenerated absorption liquid are recycled to the absorption zone.

## Revendications

1. Procédé pour éliminer C0₂ et éventuellement H₂S d'un gaz contenant C0₂ et éventuellement H₂S au moyen d'un liquide absorbant aqueux contenant de 20 à 70% en poids de méthyldié- thanolamine, procédé dans lequel on traite le gaz contenant C0₂ et éventuellement H2 S par le liquide absorbant dans une zone d'absorption, on extrait de la zone d'absorption le gaz traité, puis on régénère le liquide absorbant chargé de C0₂ et éventuellement de H2 S, obtenu dans la zone d'absorption, en détendant le liquide absorbant chargé de C0₂ et éventuellement de H₂S dans un ou plusieurs étages de détente, en extrayant un gaz de détente en tête du premier étage de détente ou, en cas de plusieurs étages de détente, en tête de l'un au moins des premier à avant-dernier étages de détente et en envoyant éventellement dans une zone de séparation, pour une régénération plus poussée, le liquide absorbant partiellement régénéré obtenu dans le dernier étage de détente, au moins un courant de gaz acide contenant C0₂ et éventuellement H₂S étant extrait de la régénération et le liquide absorbant régénéré étant renvoyé dans la zone d'absorption, caractérisé en ce qu'un courant partiel de liquide absorbant complètement ou partiellement régénéré est envoyé dans l'un au moins des étages de détente à partir desquels le gaz de détente est extrait, en un point situé au-dessus de l'admission du liquide absorbant a détendre.

2. Procédé selon la revendication 1, caractérisé en ce qu'au moins deux étages de détente sont utilisés et en ce qu'un courant partiel de liquide absorbant partiellement régénéré, extrait du dernier étage de détente, est envoyé dans l'étage ou dans chacun des étages de détente à partir desquels le gaz de détente est extrait, en un point situé chaque fois au-dessus de l'admission du liquide absorbant à détendre dans l'étage de détente concerné.

3. Procédé selon la revendication 1 ou 2, caractérisé en ce qu'on traite d'abord le gaz contenant C0₂ et éventuellement H₂S par le liquide absorbant dans un premier étage d'absorption, on envoie le gaz obtenu en tête du premier étage d'absorption dans un deuxième étage d'absorption, dans lequel il est traité, en vue de l'élimination plus poussée de C0₂ et éventuellement de H₂S, par du liquide absorbant qui présente une plus faible teneur en C0₂ et éventuellement en H₂S que le liquide absorbant envoyé dans le premier étage d'absorption, on extrait le gaz traité en tête du deuxième étage d'absorption, on envoie en tête du premier étage d'absorption le liquide absorbant aqueux pré-chargé de C0₂ et éventuellement de H₂S, obtenu au bas du deuxième étage d'absorption, on détend le liquide absorbant chargé de C0₂ et éventuellement de H2 S, obtenu dans la partie inférieure du premier étage d'absorption, en vue de sa régénération, dans au moins deux étages de détente, on renvoie dans le premier étage d'absorption un courant partiel du courant du liquide absorbant obtenu au bas du dernier étage de détente, on envoie dans l'un au moins des premier à avant-dernier étages de détente un autre courant partiel du courant du liquide absorbant obtenu au bas du dernier étage de détente, on envoie dans une zone de séparation un autre courant du liquide absorbant, obtenu au bas du dernier étage de détente, en vue de sa régénération plus poussée, et on renvoie dans le deuxième étage d'absorption le liquide absorbant régénéré, obtenu au bas de la zone de séparation.

4. Procédé selon la revendication 1 ou 2, caractérisé en ce qu'on traite le gaz contenant C0₂ et éventuellement H₂S par du liquide absorbant dans un étage d'absorption, on extrait le gaz traité en tête de l'étage d'absorption, on détend le liquide absorbant chargé de C0₂ et éventuellement de H₂S, obtenu dans la partie inférieure de l'étage d'absorption, en vue de sa régénération, dans au moins deux étages de détente et on l'envoie dans une zone de séparation en vue de sa régénération plus poussée, on envoie dans l'un au moins des premier à avant-dernier étages de détente un courant partiel du courant du liquide absorbant obtenu au bas du dernier étage de détente et/ou un courant partiel du courant du liquide absorbant obtenu au bas de la zone de séparation, et on renvoie en totalité ou partiellement dans l'étage d'absorption le courant du liquide absorbant obtenu au bas de la zone de séparation.

5. Procédé selon la revendication 1 ou 2, caractérisé en ce qu'on traite le gaz contenant C0₂ et éventuellement H₂S par du liquide absorbant dans un étage d'absorption, on extrait le gaz traité en tête de l'étage d'absorption, on détend le liquide absorbant chargé de C0₂ et éventuellement de H₂S, obtenu dans la partie inférieure de l'étage d'absorption, en vue de sa régénération, dans au moins deux étages de détente, on envoie dans l'un au moins des premier à avant-dernier étages de détente un courant partiel du courant du liquide absorbant obtenu au bas du dernier étage de détente et on renvoie dans l'étage d'absorption un autre courant partiel du courant du liquide absorbant obtenu au bas du dernier étage de détente.

6. Procédé selon l'une quelconque des revendications 1 a 5, caractérisé en ce qu'on renvoie dans la zone d'absorption l'un au moins des gaz de détente traités par du liquide absorbant régénéré.
